# EUROPEAN PATENT SPECIFICATION

(11) **EP 2 949 397 B1**
(45) Date of publication and mention of the grant of the patent: **09.11.2016**
(21) Application number: 14169869.6
(22) Date of filing: 26.05.2014
(51) Int. Cl.: B02C 21/02, B02C 23/02

(54) **Folding hopper**
Zusammenklappbarer Trichter
Trémie de pliage

(43) Date of publication of application: 02.12.2015
(73) Proprietor: Sandvik Intellectual Property AB, 811 81 Sandviken (SE)
(72) Inventor: McDevitt, Terry, Ballybofey, Co. Donegal (IE)

(56) References cited:
- EP-A2- 2 664 492
- GB-A- 2 496 522
- US-A1- 2003 226 919
- US-A1- 2006 016 104

## Description

### Field of invention

The present invention relates to a folding hopper for bulk material processing apparatus and in particular, although not exclusively, to a folding hopper in which side and end walls are capable of being moved between a lowered and a raised position and to interlock via mechanical interlocking flanges.

### Background art

Bulk material processing plants or machines can be static or transportable between operational sites. In some instances, the processing machines are transportable to be assembled or configured for use *in situ* or may be self-propelled to be easily manoeuvred on site and to facilitate loading and unloading at a platform of a transport vehicle. Example processing plants include screeners, crushers and combined crushing and screening apparatus. These machines typically include a loading hopper which receives a supply of bulk material that is then fed to a screen box or a crusher for subsequent discharge via one or a number of intermediate or discharge conveyors. The supply from the hopper to the primary or secondary processing units (screen or crusher) typically relies on gravity discharge such that the screen or crusher is generally positioned lower than the input hopper that typically determines the maximum height of the processing plant and is the uppermost component. Accordingly, it is known to configure the hopper with walls that are capable of falling or collapsing downwardly to appreciably reduce the overall machine height and allow convenient transport along public highways without risk of impact with overhead obstructions such as bridges and the like. Example foldable hopper arrangements are described in US2003226919;

US 2004/0035963; US 2006/0016104; US 2008/0041984; EP 2664492; GB 2496522 and US 2014/0124337.

However, conventional adjustably mounted hoppers are disadvantageous for a number of reasons. In particular, service personnel are often required to physically climb the plant to manually manipulate locking components at the hopper walls. As will be appreciated, in use, the walls must be secured reliably to withstand the significant loading forces that are imparted to the walls as the hopper is supplied with bulk material. Additionally, it is not uncommon for power operated actuators to become worn over time or to fail and this represents a significant safety risk to personnel where the hopper wall locking mechanism relies or is dependent upon the integrity of electronic or fluid based actuators. Accordingly, what is required is a hopper arrangement that addresses these problems.

### Summary of the Invention

It is an objective of the present invention to provide a folding hopper arrangement that provides an automated or semi-automated movement of the hopper walls between a lowered transport position and a raised operative position. It is a further specific objective to provide a hopper assembly having hopper walls that mechanically interlock to provide a secure interconnected unitary structure without the risk of the walls falling unintentionally downward due to wear or failure of electronic or fluid based components or in response to significant loading forces imparted to the hopper walls.

It is a yet further objective to provide an actuating mechanism for a folding hopper that is does not increase the overall width of the bulk material processing apparatus and that may be accommodated conveniently within an inner region of apparatus against or between other components of the processing apparatus.

The objectives are achieved, in part, via a folding hopper arrangement in which the side or end walls of the hopper are configured to be moved between a lowered and a raised position and mechanically interlocked (in the raised position) via remote control without the need for personnel to manually engage locking components.

Advantageously, the present arrangement via the type of mechanical interlocking connections and the power operated actuating mechanisms (configured to move the walls between the lowered and raised positions) is capable of engaging and disengaging lockable flanges at the end (or the start) of the wall movement procedure such that the mechanical lock is actuated via the same mechanical actuators that control and provide the movement of the hopper walls.

Additionally, the locking connections are arranged such that the strength of the locking connection is proportional to the weight of the hopper walls. That is, the present interengaging connections are provided by locking flanges that are attached rigidly to the end and sidewalls and comprise hooked shaped portions configured to overlap one another. Accordingly, the end and sidewalls are held and locked into engagement and prevented from pivoting downwardly under gravity (without the need for support from the power operated movement mechanisms) by the hooked portions that are maintained in the engaged state by the weight of the hopper walls.

The locking and unlocking of the hopper walls is achieved via the power operated actuating mechanism of the side or end wall being configured to displace the wall in a first pivotal movement and a second substantially linear translational movement in the upward and downward direction. In particular, to provide locking engagement, one of the hopper walls may be first pivoted from the lowered position to the raised position where it may then be lowered vertically by the power operated mechanism to allow the side and end wall mounted hooks to interengage. The reverse linear and pivoting movement of the hopper wall may then be conveniently actuated to provide the unlocking of the walls to enable their subsequent downward folding.

According to a first aspect of the present invention there is provided a folding hopper assembly as defined in claim 1.

Preferably, the first and second interlock connections comprise flanges having hooked portions that are configured to overlap one another when interlocked. Preferably, the flanges are positioned at or towards respective end edges of the side and end walls to engage one another as the end edges are mated in touching or near touching contact when the walls are in the raised first position. The hooked portions are advantageous to ensure a secure and reliable interconnection of the hopper walls and to provide sufficient physical overlap of the rigid flanges. The flanges are shaped and dimensioned to have sufficient integrity and strength to support the weight of the hopper walls exclusively and importantly without a reliance on additional electronic or fluid based actuators. The end regions of the hooked portions on each wall are effective to prevent the adjacent wall from unintentionally falling downward by representing an abutment to hold and retain the adjacent wall in the raised position.

Optionally, the first power operated mechanism comprises a first arm pivotally mounted to a second arm such that the first and second arms are configured to fold relative to one another and the support frame when the sidewall is moved to the lowered first position and to align to form a straightened support brace when the sidewall is in the raised second position. Such an arrangement is beneficial to provide further support to the sidewalls and in turn the end wall so as to stabilise the walls against impact loading forces.

Optionally, the second arm is pivotally mounted to the frame and the first arm is attached to the sidewall such that the first and second arms are configured to fold inwardly towards a position underneath the hopper when the sidewall is moved to the lowered first position. Advantageously, the folding mechanism does not present a safety hazard to operating personnel as it folds inwardly and also enables the apparatus to be operated in confined regions or in close proximity to other processing devices or structures that would otherwise not be possible with an outward folding mechanism.

Preferably, the first power actuator is attached at a region of the first arm and a region of the second arm. Such an arrangement is advantageous to provide a direct coupling between the actuator and the movable arms to enable the actuator to be isolated when the arms are straightened. Preferably, the first power actuator is mounted at the first arm and the second arm such that when the arms are aligned to form the straightened support brace the first powered actuator is isolated from compressive forces transmitted through the support brace from the sidewall.

Optionally, the second power actuator is mounted to extend between the frame and the end wall and the third power actuator is mounted to extend between the frame and the second pivot mount to provide a translational movement of the second pivot mount in the upward and downward direction. The third power actuator is preferably mounted directly in contact with the end wall so as to maintain to a minimum the load transmitted through the actuator in raising and lowering the end wall during operation.

Optionally, the second pivot mount comprises: a mount bracket provided at the support frame, the bracket having a first elongate slot; and a first pivot pin about which the end wall can pivot, the first pivot pin slidably mounted within the elongate slot. A pivot pin and slot arrangement is advantageous to provide a reliable and lightweight mechanism for displacing the hopper wall and in particular to minimise the number of working components and the overall complexity of the mechanism.

Preferably, the third power actuator is mounted to act on the first pivot pin to cause the first pivot pin to slide in the upward and downward direction within the first slot; and the second power actuator is mounted between the end wall and the bracket to cause the end wall to rotate about the first pivot pin. Movably mounting the third power actuator is advantageous to minimise stress at the actuator by maintaining the desired loading angles and limiting the range of extension of the actuator to achieve longevity of the operating components.

Preferably, the third power actuator is mounted at the bracket via a second pivot pin slidably mounted within a second elongate slot provided in the bracket, the third power actuator configured to move in the upward and downward direction with the translational movement of the end wall. The pin and slot arrangement is advantageous to provide a reliable mechanism for displacing the actuator without the need for additional components that would otherwise increase the complexity and weight of the movement mechanism.

Preferably, the second power operated mechanism comprises: a pair of brackets, a pair of first pivot pins and a pair of first and second elongate slots; and a pair of second power operated actuators and a pair of third power operated actuators provided respectively at each bracket. Such an arrangement is beneficial to provide a robust and stable movement mechanism whilst maintaining to a minimum the weight of the components associated with displacing the hopper wall.

Preferably, the apparatus further comprises at least one cover shield pivotally mounted to hang from a region of the end wall to cover the second and third power operated actuators when the end wall in the raised second position. The shield is beneficial to provide a safety guard for operational personnel and to at least partially cover the internal components of the actuating mechanism from dust and debris during use. Preferably, the apparatus comprises a plurality of guards or shields to protect and cover all actuating mechanisms associated with the hopper walls.

Preferably, the apparatus comprises two sidewalls wherein each wall comprises a plurality of the flanges at a respective end edge, each flange of the sidewalls arranged such that each hook portion extends upwardly; and wherein the end wall comprises a plurality of flanges at each end edge wherein each flange of the end wall is arranged such that each hook portion extends downwardly; wherein when the flanges are interlocked the respective upward and downward extending hook portions overlap to interlock the sidewalls with the end wall.

According to a second aspect of the present invention there is provided mobile bulk material processing apparatus as defined in claim 15.

### Brief description of drawings

A specific implementation of the present invention will now be described, by way of example only, and with reference to the accompanying drawings in which:
Figure 1 is an external side elevation view of a mobile crushing apparatus having a mainframe, a crusher, a feed hopper and tracks to enable the apparatus to be self-propelled over the ground according to a specific implementation of the present invention;
Figure 2 is a rear perspective view of the mainframe and input hopper of the apparatus of figure 1 according to the specific implementation;
Figure 3 is a further rear perspective view of the hopper and mainframe of figure 2 with selected components removed for illustrative purposes;
Figure 4 is a side perspective view of the hopper and mainframe of figure 3 with selected components removed for illustrative purposes;
Figure 5 is a rear perspective view of the hopper and mainframe of figure 4 with selected components removed for illustrative purposes;
Figure 6 is further rear perspective view of the hopper and mainframe of figure 5 with an end wall in a raised position to disengage hopper wall interlock connections having selected components removed for illustrative purposes;
Figure 7 is a rear perspective view of the hopper and mainframe of figure 6 with the end wall pivoted to a lowered intermediate position;
Figure 8 is a further rear perspective view of the hopper and mainframe of figure 7 with the end wall pivoted to a lowest position with selected components removed for illustrative purposes;
Figure 9 is a rear perspective view of the hopper and mainframe of figure 8 with a sidewall and end wall pivoted downwardly to their lowest positions with selected components removed for illustrative purposes;
Figure 10 is an upper perspective view of the hopper and mainframe of figure 9 with a sidewall and end wall pivoted to their lowest positions.

### Detailed description of preferred embodiment of the invention

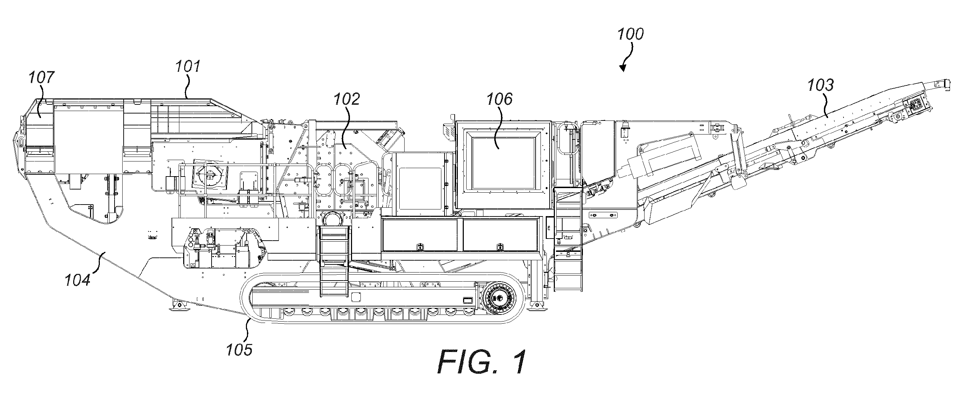

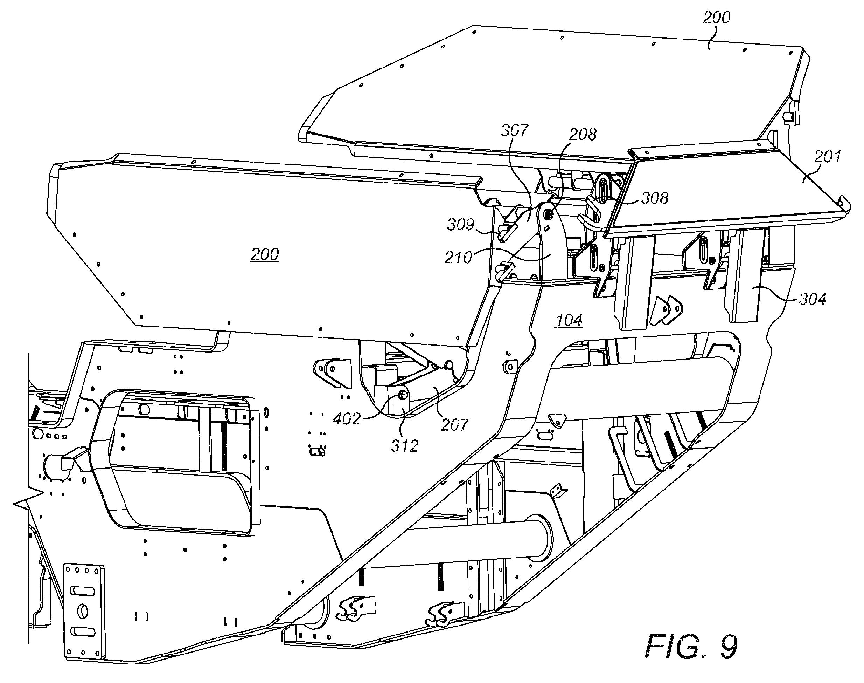

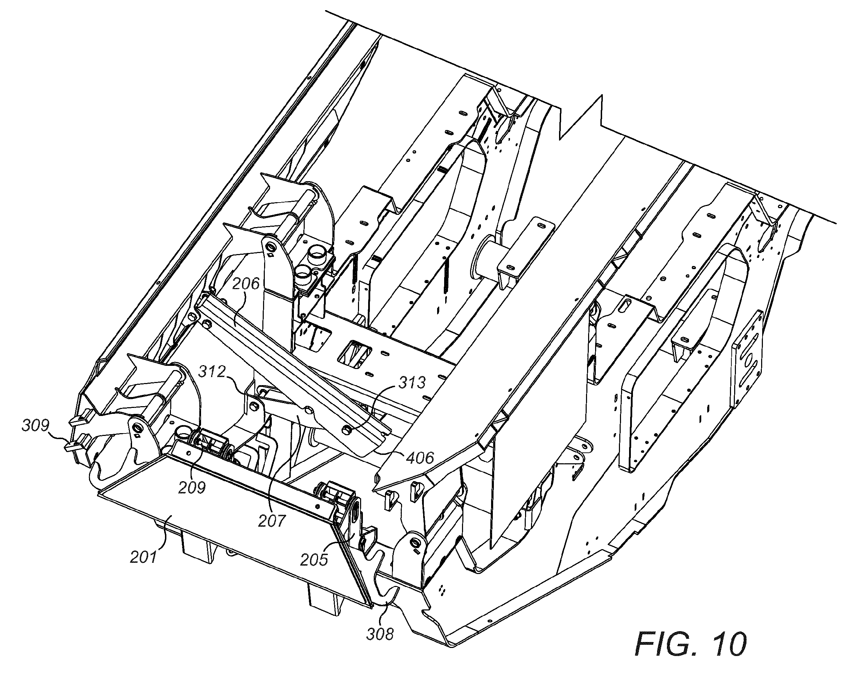

Referring to figure 1, a bulk material processing machine 100 comprises a mainframe 104 that supports an undercarriage to mount a pair of endless tracks 105 to enable machine 100 to be self-propelled over the ground. Machine 100 further comprises a primary motor 106, an input feed hopper indicated generally by reference 101, a material crusher 102 and a discharge conveyor 103. Hopper 101 comprises folding hopper walls 107 movable between a raised uppermost position (illustrated in figure 1) and a pivoted or collapsed lower position (illustrated in figures 9 and 10).

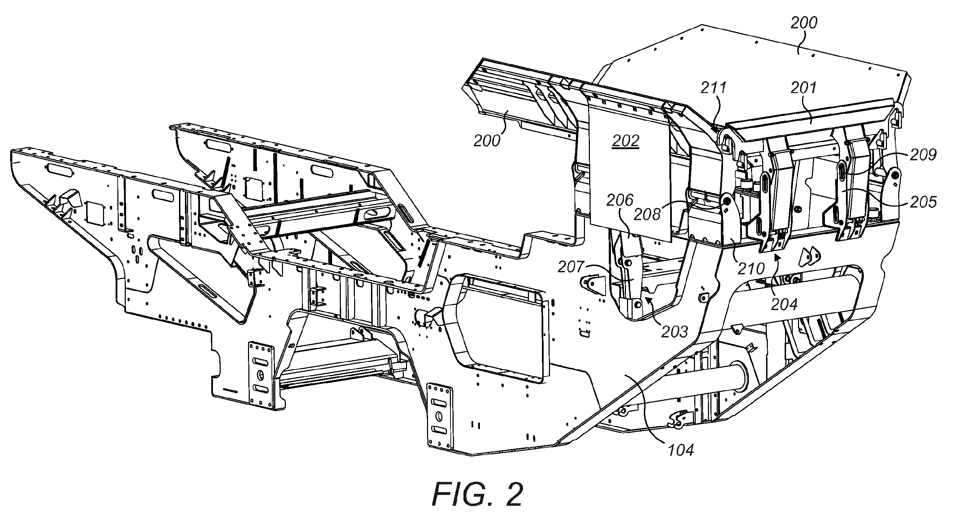

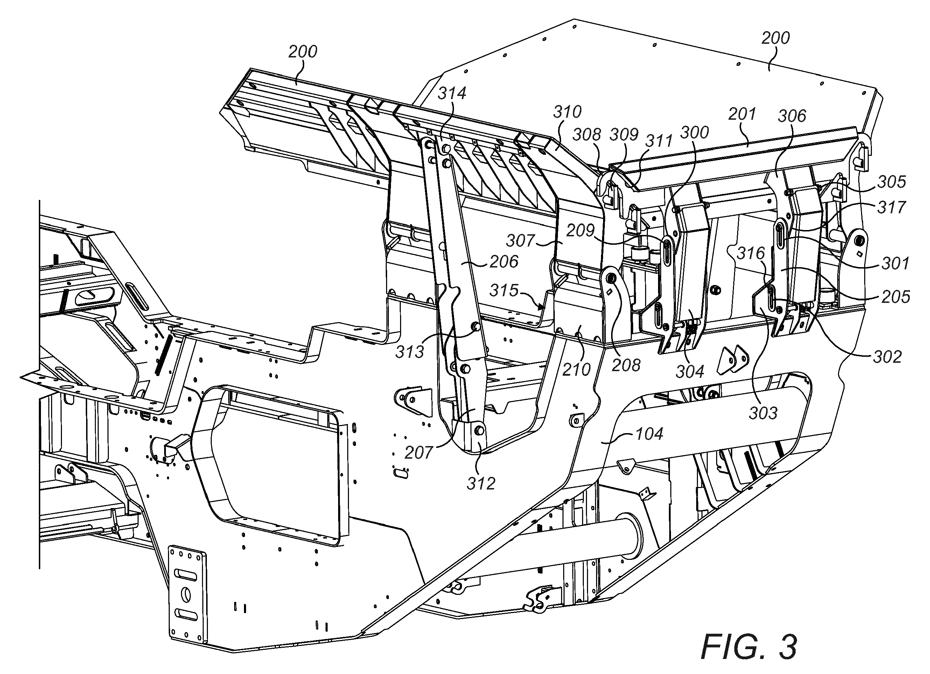

Referring to figures 2 and 3, hopper 101 comprises a pair of sidewalls 200 aligned generally with a longitudinal axis of mainframe 104 and an end wall 201 provided at a rear end of machine 100 and extending generally perpendicular to sidewalls 200. With walls 200, 201 orientated in the uppermost raised position of figure 2, end wall 201 extends between a rear edge 310 of each sidewall 200 so as to enclose the inner region of hopper 101 to contain the fed bulk material. In particular, end wall 201 comprises a pair of end edges 311 configured to mate in touching or close touching contact with the sidewall end edges 310.

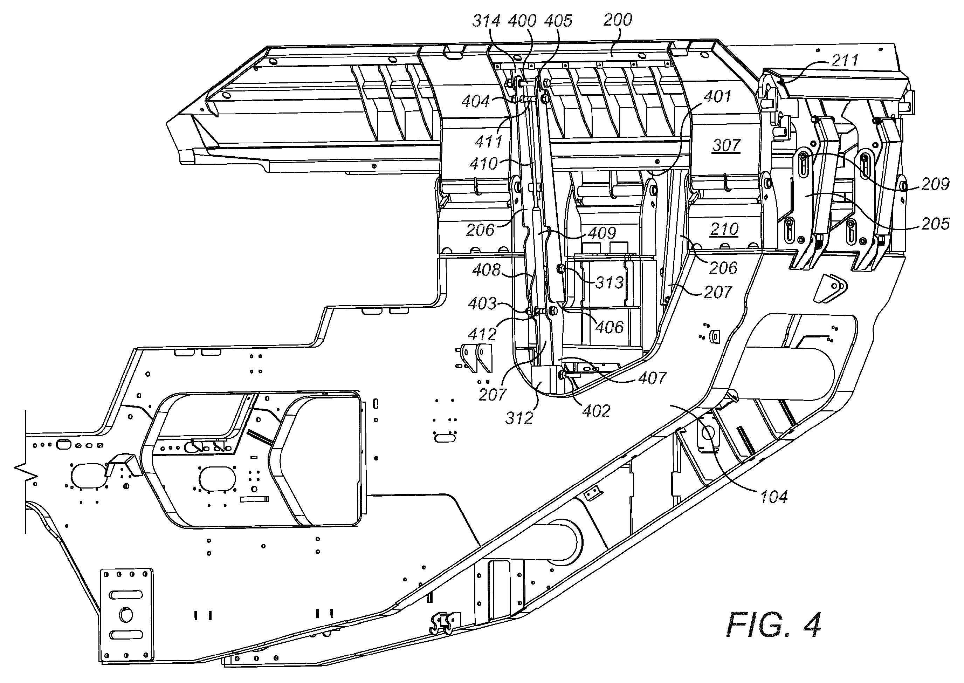

Machine 100 comprises a pair of first power operated mechanisms indicated generally by reference 203 configured to actuate raising and lowering of each sidewall 200 between the positions of figure 1 and figure 9. Each mechanism 203 comprises a first elongate arm 206 pivotally mounted to a relatively short second arm 207. Referring to figure 4, first arm 206 comprises first uppermost end 405 pivotally attached to a mount region 314 provided at an outermost part of sidewall 200 via a pivot pin 400. The second lowermost end 406 of first arm 206 is pivotally mounted at an uppermost end 408 of second arm 207 via a pivot pin 313. Second arm 207 is pivotally mounted to frame 104 via a base mount 312. In particular, a lower end 407 of arm 207 is received within base mount 312 and pivotally mounted via pivot pin 402.

A power operated linear actuator (in the form of a hydraulic cylinder) 409 is mounted at respective ends to first and second arms 206, 207. In particular, a lowermost end 412 of cylinder 409 is pivotally mounted to pivot pin 403 at second arm 207. Cylinder 409 comprises a retractable rod 410 that is mounted at its uppermost end 411 to first arm 206 via pivot pin 404. Accordingly, via actuation of cylinder 409, first and second arms 206, 207 are configured to fold or collapse inwardly via pivot pin 313 such that in their folded or hinged configuration, arms 206, 207 extend generally inwardly to region 315 positioned substantially below a lower region 401 of hopper 101. In particular, the inward folded arms 206, 207 are illustrated further in figure 10 such that the first arm lower end 406 and the second arm upper end 408 are positioned immediately below hopper region 401 when the arms are collapsed. Advantageously, the first and second arms 206, 207 do not fold or hinge outwardly that would otherwise increase the overall width of machine 100. Moreover, each of the sidewall actuating mechanisms 203 are configured so as to not interfere with one another when hinged to the position of figure 10.

Pivoting of each sidewall 200 is achieved via a pair of pivot mounts provided at a rearward end and towards a forward end of each sidewall 200. Each pivot mount comprises a base mount 210 provided at mainframe 104 and a sidewall mount 307 extending generally downward from an outside region of each sidewall 200. Mount 307 is configured to pivot relative to mount 210 via an intermediate pivot pin 208. Each power operated mechanism 203 and in particular arms 206 and 207 are shielded by a substantially planar plate 202 pivotally mounted to the outside of each sidewall 200. Plate 202 hangs downwardly to conceal arms 206, 207 and cylinder 409 to both protect the mechanism from dust and debris and to increase the operational safety of the apparatus 100 with regard to operating personnel.

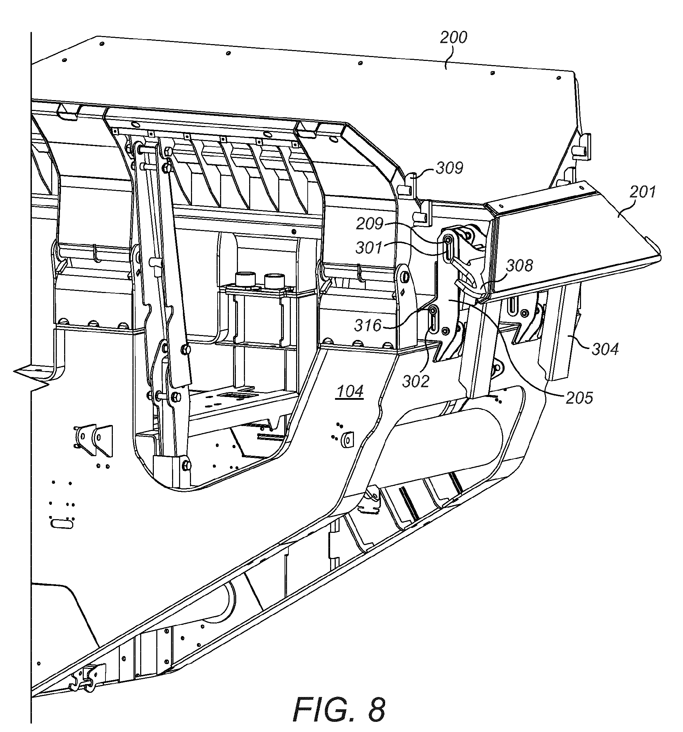

Machine 100 further comprises a pair of second power operated mechanisms indicated generally by reference 204. Each second mechanism 204 is mounted to extend between a rear part of mainframe 104 and end wall 201 to be capable of actuating raising and lowering of end wall 201 between the raised position of figure 1 and the lowered position of figure 8. Each mechanism 204 comprises an upstanding mount bracket 205 rigidly mounted at frame 104 and formed by a pair of spaced apart plate like bodies. Bracket 205 comprises an upper region 300 positioned closest to the upper region of end wall 201 and a lower region 303 mounted at frame 104. A first substantially vertically extending elongate slot 301 is provided at bracket upper region 300 and a second substantially vertically extending elongate slot 302 is provided at bracket lower region 303. Both slots 301, 302 are aligned substantially parallel and are spaced apart in a vertical direction by the main length of bracket 205. The end wall 201 comprises a pair of generally downwardly projecting wall mounts 306 each having a lowermost end 317 that is at least partially received within each bracket upper region 300. A pivot pin 209 is slidably mounted within slot 301 and extends through wall mount end 317 to pivotally couple end wall 201 to each bracket 205 and, in turn, frame 104. Accordingly, end wall 201 is capable of pivoting in the upward and downward direction via pivot pin 209. An elongate guard 304 hangs from each wall mount 306 via a pivot pin 305 and is shaped and dimensioned to conceal the internal components of each power operated mechanism 204. That is, the internal components of each mechanism 204 are encased within each bracket 205 and guard 304.

Referring to figures 3, 5 and 6, each mechanism 204 comprises a pair of power operated linear actuators (in the form hydraulic cylinders) 501, 502 positioned side by side within the internal space defined by each bracket 205. Cylinder 502 is aligned to be inclined relative to the horizontal such that an uppermost end 507 of an elongate rod 505 (retractably mounted at cylinder 502) is positioned rearwardly of a lowermost end of cylinder 502. In particular, cylinder 502 (via its lowermost end) is moveably mounted at bracket 205 via a pivot pin 316 that is slidably mounted within lower elongate slot 302. Uppermost rod end 507 is in turn mounted at a pivot pin 504 that is attached to wall mount 306. Neighbouring cylinder 501 also comprises a retractably mounted elongate rod 506 having an uppermost end 503. Upper end 503 is mounted at pivot pin 209 whilst a lowermost end of cylinder 501 is mounted at a lower pivot pin 500 attached to bracket lower region 303.

Accordingly, via each mechanism 204, end wall 201 is configured to move in a substantially linear upward and downward translational direction and to pivot or fold in the upward and downward direction. In particular, the linear vertical raising and lowering of end wall 201 is provided by actuating cylinder 501. As rod 506 is extended from cylinder 501, pivot pins 209 and 316 are configured to slide in a vertical direction within the respective slots 301, 302. Pivoting of end wall 201 is provided by actuation of cylinder 502 such that the change in length of retractable rod 505 causes wall mount 306 to pivot about pin 209. That is, cylinder 502 is also displaced vertically via the actuation of cylinder 501 to maintain the actuation alignment angle of cylinder 502 relative to wall mounts 306.

So as to secure hopper walls 107 in the raised position of figure 1, each wall 107 comprises a plurality of interlocking flanges indicated generally by reference 211. In particular, to provide a reliable and conveniently engagable and releasable lock, each flange 211 is formed exclusively as a mechanical component being rigidly mounted to each respective wall 200, 201. As such, flanges 211 are fixed rigidly to each respective wall 200, 201 and the walls 200, 201 may be interlocked together exclusively by the frictional contact and mechanical interlock provided by flanges 211.

In particular, each sidewall 200 comprises a pair of flanges 211 having hooked portions 309 projecting rearward from the rear end edge 310 at a location at or just above wall mount 307. Each hook portion 309 is orientated such that the hook projects generally upward. Similarly, end wall 201 comprises a pair flanges 211 provided at each lengthwise end edge 311. Each end wall flange 211 comprises a corresponding hooked portion 308 projecting in the widthwise direction from end edge 311. Each hooked portion 308 is orientated to be downward facing so as to mate in overlapping contact against the respective hooked portions 309 of wall flanges 211 when the walls 107 are in the uppermost raised position of figure 1.

The hooked portions 308, 309 within each pair are positioned above and below one another so as to be spaced apart in the vertical direction. With walls 200, 201 in the upright position, end wall 201 may be considered to be hooked onto and supported by each sidewall 200 via overlapping engagement of the respective hooked portions 308, 309. Additionally, sidewalls 200 in the raised position of figure 1 are further supported by arms 206, 207 that are capable of aligning to extend parallel to one another to form a straightened support brace or strut as illustrated in figure 3. That is, arms 206, 207 are configured to pivot to a straightened '*locked-out*' position. Such a configuration is advantageous to isolate each cylinder 409 from compressive forces imparted by the weight of sidewall 200 and impact forces as hopper 101 is loaded with bulk material. Arms 206, 207 also support the interlocking of hooked portions 308, 309 so as to provide a robust and reliable hopper wall interlocking assembly.

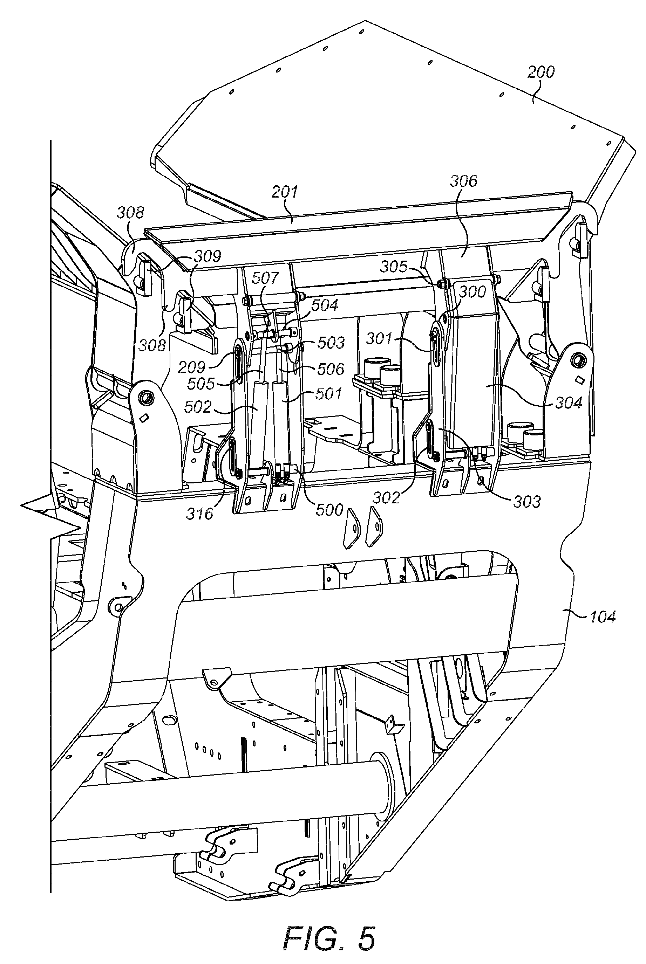

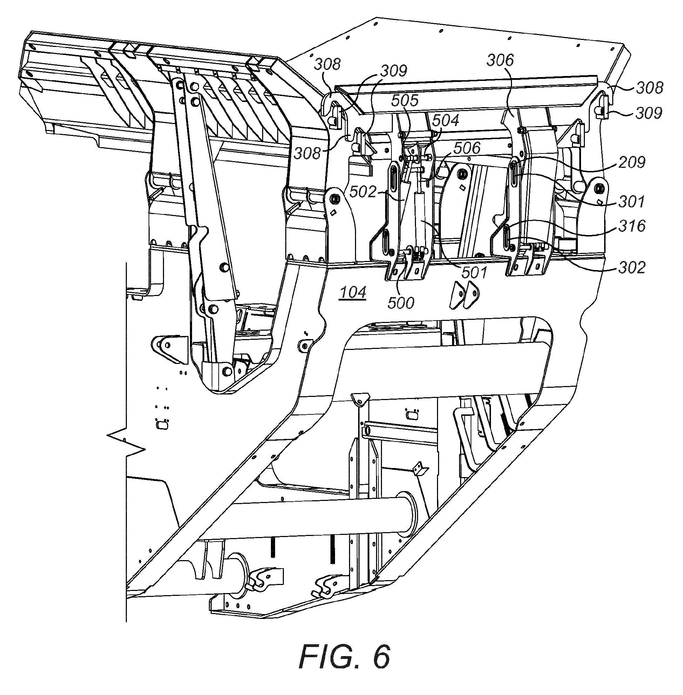

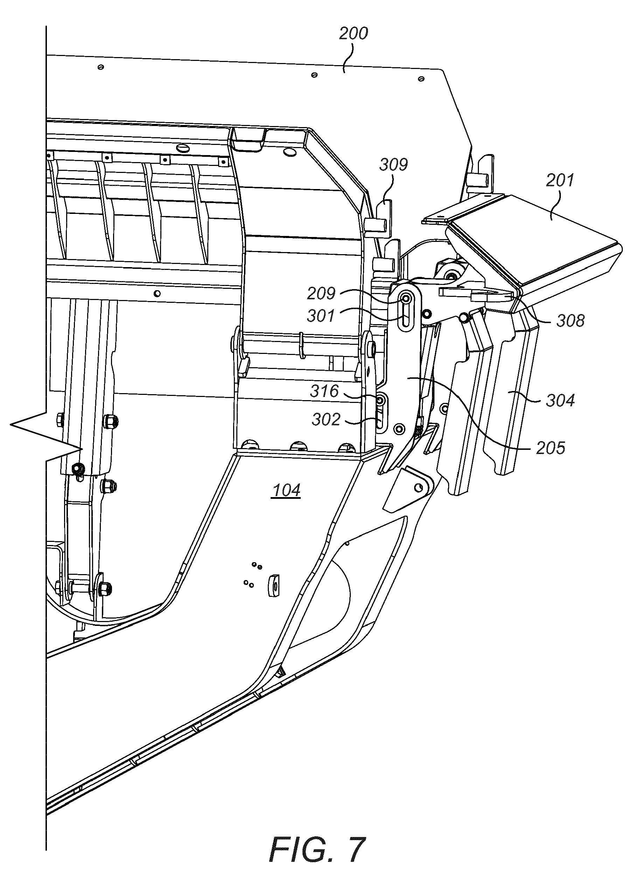

Engagement and disengagement of hooked portions 308, 309 is achieved via a combined actuation of cylinders 409, 501 and 502. Referring to figures 3 to 10, with the walls 107 in the upright position of figure 1, end wall 201 is initially displaced upwardly in the vertical direction by actuation of cylinder 501. Pivot pins 209, 316 are therefore caused to slide within corresponding slots 301, 302 as illustrated in figures 5 and 6. This initial linear translational movement as shown in figure 6 disengages hooked portions 308 from hooked portions 309. End wall 201 is then capable of pivoting downwardly about pivot pins 209 via actuation of cylinder 502 to achieve the partially pivoted orientation of figure 7. Wall 201 continues to pivot to the fully lowered position of figure 8 with pins 209, 316 still positioned at the uppermost end of respective slots 301, 302. Accordingly, cylinder 502 is maintained in the upward displaced position via cylinder 501. Cylinder 409 is then actuated to fold inwardly first and second arms 206, 207 into region 315 as illustrated in figures 9 and 10. Accordingly, each sidewall 200 is folded downwardly about pivot pins 208 to the fully declined position of figures 9 and 10. The configuration of arms 206, 207 to fold inwardly is advantageous to maintain to a minimum the overall width of machine 100 and to provide a convenient region 401 below the hopper main body to accommodate other components such as a fines conveyor (not shown).

Raising and interlocking walls 107 is then achieved by the reverse order of steps involving both the pivotal movement of the side walls 200 then end wall 201 followed by the linear vertical lowering of end wall 201 to complete the interlocking of hooked portions 308, 309.

## Claims

1. A folding hopper assembly (101) for bulk material processing apparatus (100) comprising:
at least one sidewall (200) pivotally mounted to a support frame (104) via at least one first pivot mount;
a first power operated mechanism (203) having a first power operated actuator (409) to provide pivoting of the sidewall (200) between a lowered first position and a second raised position;
at least one end wall (201) pivotally mounted to the support frame (104) via at least one second pivot mount and extending perpendicular or transverse to the sidewall (200);
a second power operated mechanism (204) having a second power operated actuator (502) to provide pivoting of the end wall (201) between a lowered first position and a second raised position;
**characterised by**:
first (309) and second (308) mechanical interlock connections provided respectively at the side (200) and end (201) wall such that when interlocked the side (200) and end (201) walls are prevented from being pivoted from the raised second position to the lowered first position;
wherein the first (203) or second (204) power operated mechanism comprises a third power operated actuator (501) configured to provide a translational movement of the side (200) or end (201) wall in an upward and downward direction such that a locking and unlocking of the first (309) and second (308) interlock connections comprises the pivoting and the translational movement of the side (200) or end (201) wall.

2. The assembly as claimed in claim 1 wherein the first (309) and second (308) interlock connections comprise flanges (211) having hooked portions that are configured to overlap one another when interlocked.

3. The assembly as claimed in claim 2 wherein the flanges are positioned at or towards respective end edges (310, 311) of the side (200) and end (201) walls to engage one another as the end edges (310, 311) are mated in touching or near touching contact when the walls (200, 201) are in the raised first position.

4. The assembly as claimed in any preceding claim wherein the first power operated mechanism (203) comprises a first arm (206) pivotally mounted to a second arm (207) such that the first and second arms (206, 207) are configured to fold relative to one another and the support frame (104) when the sidewall (200) is moved to the lowered first position and to align to form a straightened support brace when the sidewall (200) is in the raised second position.

5. The assembly as claimed in claim 4 wherein the second arm (207) is pivotally mounted to the frame (104) and the first arm (206) is attached to the sidewall (200) such that the first and second arms (206, 207) are configured to fold inwardly towards a position underneath the hopper (101) when the sidewall (200) is moved to the lowered first position.

6. The assembly as claimed in claims 4 or 5 wherein the first power actuator (409) is attached at a region of the first arm (206) and a region of the second arm (207).

7. The assembly as claimed in claim 6 wherein the first power actuator (409) is mounted at the first arm (206) and the second arm (207) such that when the arms (206, 207) are aligned to form the straightened support brace the first powered actuator (409) is isolated from compressive forces transmitted through the support brace from the sidewall (200).

8. The assembly as claimed in any preceding claim wherein the second power actuator (502) is mounted to extend between the frame (104) and the end wall (201) and the third power actuator (501) is mounted to extend between the frame (104) and the second pivot mount to provide a translational movement of the second pivot mount in the upward and downward direction.

9. The assembly as claimed in claim 8 wherein the second pivot mount comprises:
a mount bracket (205) provided at the support frame (104), the bracket (205) having a first elongate slot (301); and
a first pivot pin (209) about which the end wall (201) can pivot, the first pivot pin (209) slidably mounted within the elongate slot (301).

10. The assembly as claimed in claim 9 wherein:
the third power actuator (501) is mounted to act on the first pivot pin (209) to cause the first pivot pin (209) to slide in the upward and downward direction within the first slot (301); and
the second power actuator (502) is mounted between the end wall (201) and the bracket (205) to cause the end wall (201) to rotate about the first pivot pin (209).

11. The assembly as claimed in claim 10 wherein the third power actuator (501) is mounted at the bracket (205) via a second pivot pin (316) slidably mounted within a second elongate slot (302) provided in the bracket (205), the third power actuator (501) configured to move in the upward and downward direction with the translational movement of the end wall (201).

12. The assembly as claimed in claim 11 wherein the second power operated mechanism (204) comprises:
a pair of mount brackets (205), a pair of first pivot pins (209) and a pair of first and second elongate slots (301, 302); and
a pair of second power operated actuators (502) and a pair of third power operated actuators (501) provided respectively at each bracket (205).

13. The assembly as claimed in any one of claims 10 to 12 further comprising at least one cover shield (304) pivotally mounted to hang from a region of the end wall (201) to cover the second and third power operated actuators (502, 501) when the end wall (201) in the raised second position.

14. The assembly as claimed in claim 3 comprising two sidewalls (200) wherein each wall (200) comprises a plurality of the flanges at a respective end edge (310), each flange of the sidewalls (200) arranged such that each hook portion extends upwardly; and
wherein the end wall (201) comprises a plurality of flanges at each end edge (311) wherein each flange of the end wall (201) is arranged such that each hook portion extends downwardly;
wherein when the flanges are interlocked the respective upward and downward extending hook portions overlap to interlock the sidewalls (200) with the end wall (201).

15. Mobile bulk material processing apparatus (100) comprising:
a mainframe (104);
a processing unit (102) supported at the mainframe (104);
tracks (105) or wheels to allow the apparatus (100) to move over the ground; and
a folding hopper assembly (101) as claimed in any proceeding claim to contain material to be fed to the processing unit (102).

## Patentansprüche

1. Füllschachtaufbau (101) für eine Schüttgutverarbeitungsvorrichtung (100),
welcher mindestens eine Seitenwand (200), die über mindestens eine erste Gelenkhalterung schwenkbar an einem Stützrahmen (104) befestigt ist;
einen ersten maschinellen Mechanismus (203), der einen ersten maschinellen Betätiger (409) zum Schwenken der Seitenwand (200) zwischen einer abgesenkten ersten Position und einer zweiten erhöhten Position hat;
mindestens eine Stirnwand (201), die am Stützrahmen (104) über mindestens eine zweite Gelenkhalterung schwenkbar befestigt ist und die sich rechtwinklig oder quer zur Seitenwand (200) erstreckt;
einen zweiten maschinellen Mechanismus (204), der einen zweiten maschinellen Betätigter (502) hat, um das Drehen der Stirnwand (201) zwischen einer abgesenkten ersten Position und einer zweiten erhöhten Position zu gewährleisten, aufweist,
**dadurch gekennzeichnet, dass**
ein erstes (309) und zweites (308) mechanisches Verriegelungselement an der Seiten- (200) und an der Stirnwand (201) vorhanden sind, sodass, die Seiten (200)- und die Stirnwand (201), wenn sie verriegelt sind, gehindert sind, sich von der der erhöhten zweiten Position zu der abgesenkten ersten Position zu verschwenken;
wobei der erste (203) und der zweite (204) maschinelle Mechanismus einen dritten maschinellen Betätiger (501) aufweisen, der dazu ausgelegt ist, eine translatorische Bewegung der Seiten- (200) oder Stirnwand (201) in eine Aufwärts- oder Abwärtsrichtung zu ermöglichen, so dass ein Verriegeln und Entriegeln des ersten (308) und zweiten (308) Verbindungselementes das Drehen und die translatorische Bewegung der Seiten- (200) und Stirnwand (201) einschließt.

2. Anordnung nach Anspruch 1, wobei das erste (309) und zweite (308) Verriegelungselement Flansche (211) aufweisen, die hakenförmige Teile haben, die so ausgelegt sind, dass sie ineinander greifen, wenn sie verriegelt sind.

3. Anordnung nach Anspruch 2, wobei die Flansche an oder in Richtung entsprechender Endkanten (310, 311) der Seiten- (200) und Stirnwände (201) so angeordnet sind, dass sie miteinander in Eingriff treten, wenn die Endkanten (310, 311) in passenden Berührungs- oder fast berührenden Kontakt kommen, wenn die Wände (200, 201) sich in der in der ersten hochgefahrenen Position befinden.

4. Anordnung nach einem der vorangehenden Ansprüche, wobei der erste maschinelle Mechanismus (203) einen ersten Arm (206) aufweist, der an einen zweiten Arm (207) schwenkbar montiert ist, sodass der erste und zweite Arm (206, 207) so ausgelegt sind, dass sie sich relativ zueinander und zu dem Tragrahmen (104) einfalten, wenn die Seitenwand (200) in die erste abgesenkte Position bewegt wird und sich so auszurichten, dass sie einen geraden Stützbalken bilden, wenn die Seitenwand (200) in der erhöhten zweiten Position ist.

5. Anordnung nach Anspruch 4, wobei der zweite Arm (207) zentral an dem Rahmen (104) montiert ist und der erste Arm (206) an der Seitenwand (200) befestigt ist, sodass der erste und zweite Arm (206, 207) so ausgelegt sind, dass sie sich nach innen in Richtung einer Position unter den Trichter (101) falten, wenn die Seitenwand (200) in die abgesenkte erste Position bewegt wird.

6. Anordnung nach Anspruch 4 oder 5, wobei der erste maschinelle Betätiger (409) an einem Bereich des ersten Arms (206) und einem Bereich des zweiten Arms (207) montiert ist.

7. Anordnung nach Anspruch 6, wobei der erste maschinelle Betätiger (409) am ersten Arm (206) und am zweiten Arm (207) so montiert ist, dass dann, wenn die Arme (206, 207) so ausgerichtet sind, dass sie einen geraden Stützbalken bilden, der erste maschinelle Betätiger (409) isoliert ist von Druckkräften, die von der Seitenwand über den Stützbalken (200) übertragen werden.

8. Anordnung nach einem der vorangehenden Ansprüche, wobei der zweite maschinelle Betätiger (502) so montiert ist, dass er sich zwischen dem Rahmen (104) und der Stirnwand (201) erstreckt und der dritte maschinelle Betätiger (501) so montiert ist, dass er sich zwischen dem Rahmen (104) und der zweiten Gelenkhalterung erstreckt, um eine translatorische Bewegung der zweiten Gelenkhalterung in die Aufwärts- und Abwärtsrichtung bereitzustellen.

9. Anordnung nach Anspruch 8, wobei die zweite Gelenkhalterung aufweist:
einen Befestigungsbügel (205), der am Tragrahmen (104) vorgesehen ist, der Bügel (205) mit einem ersten Langschlitz (301); und
einer Gelenkhalterung (209), um welche die Stirnwand (201) verschwenken kann, wobei die Gelenkhalterung (209) verschiebbar in dem ersten Langschlitz (301) montiert ist.

10. Anordnung nach Anspruch 9, wobei:
der dritte maschinelle Betätiger (501) montiert ist, dass er auf die erste Gelenkhalterung (209) wirkt, um zu veranlassen, dass die erste Gelenkhalterung (209), in Aufwärts- oder Abwärtsrichtung in dem ersten Schlitz gleitet; und
wobei der zweite maschinelle Betätiger (502) zwischen der Stirnwand (201) und dem Bügel (205) montiert ist, um ein Verschwenken der Stirnwand (201) um die erste Drehachse (209) zu bewirken.

11. Anordnung nach Anspruch 10, wobei der dritte maschinelle Betätiger (501) an dem Bügel (205) mittels einer zweiten Gelenkhalterung (316) befestigt ist, die verschiebbar in einem zweiten Langschlitz (302) montiert ist, der in der Vorrichtung (205) vorgesehen ist und der dritte maschinelle Betätiger so ausgelegt ist, dass er sich mit der translatorischen Bewegung der Stirnwand (201) in die Aufwärts- oder Abwärts Richtung bewegt.

12. Anordnung nach Anspruch 11, wobei
der zweite maschinelle Mechanismus (204) aufweist:
ein Paar von Montagebügeln (205), ein Paar von ersten Gelenkhalterungen (209) und ein Paar von ersten und zweiten Langschlitzen (301, 302); und
ein Paar von zweiten maschinellen Betätigern (502) und ein Paar von dritten maschinellen Betätigern (501) aufweist, die jeweils an jedem Bügel (205) vorgesehen sind.

13. Anordnung nach einem der Ansprüche 10 bis 12, die weiterhin mindestens eine Abdeckung (304) aufweist, die schwenkbar so montiert von einem Abschnitt der Stirnwand (201) herabhängt, um so den zweiten und dritten maschinellen Betätiger (502, 501) zu verdecken, wenn die Stirnwand (201) in der erhöhten zweiten Position ist.

14. Die Anordnung nach Anspruch 3 mit zwei Seitenwänden (200), wobei jede Seitenwand (200) eine Vielzahl von Flanschen an einer entsprechenden Stirnkante (310) aufweist, wobei jeder Flansch der Seitenwand (200) so angeordnet ist, dass jeder Hakenteil sich nach oben erstreckt; und
wobei die Stirnwand (201) eine Vielzahl von Flanschen an jeder Stirnkante (311) aufweist, wobei jeder Flansch der Stirnwand (201) so angeordnet ist, dass jeder Hakenteil sich nach unten erstreckt;
wobei dann, wenn die Flansche verriegelt sind, die entsprechenden aufwärts oder abwärts erstreckenden Hakenteile sich überlappen, um die Seitenwände (200) mit den Stirnwänden (201) zu verriegeln.

15. Mobile Schüttgutverarbeitungsmaschine (100), die aufweist:
einen Hauptrahmen (104);
eine am Hauptrahmen (104) gelagerte Verarbeitungseinheit (102);
Ketten (105) oder Räder um das Bewegen der Maschine (100) über den Boden zu ermöglichen, und
eine faltbare Trichteranordnung (101) nach einem der vorangehenden Ansprüche, um Material zu enthalten, das der Verarbeitungseinheit zugeführt werden soll.

## Revendications

1. Ensemble de trémie pliante (101) pour un appareil de traitement de matériau en vrac (100) comprenant :
au moins une paroi latérale (200) montée de manière pivotante sur un bâti de support (104) via au moins un premier support de pivot ;
un premier mécanisme motorisés (203) ayant un premier actionneur motorisé (409) pour fournir le pivotement de la paroi latérale (200) entre une première position abaissée et une seconde position levée ;
au moins une paroi d'extrémité (201) montée de manière pivotante sur le bâti de support (104) via au moins un second support de pivot et s'étendant perpendiculairement ou transversalement par rapport à la paroi latérale (200) ;
un second mécanisme motorisés (204) ayant un deuxième actionneur motorisés (502) pour fournir le pivotement de la paroi d'extrémité (201) entre une première position abaissée et une seconde position levée ;
**caractérisée par** :
des premier (309) et second (308) raccordements de verrouillage mutuel mécaniques prévus respectivement sur la paroi latérale (200) et la paroi d'extrémité (201) de sorte que lors du verrouillage mutuel , les parois latérale (200) et d'extrémité (201) ne peuvent pas pivoter de la seconde position levée à la première position abaissée ;
dans lequel le premier (203) ou le second (204) mécanisme motorisé comprend un troisième actionneur motorisé (501) configuré pour fournir un mouvement de translation de la paroi latérale (200) ou d'extrémité (201) dans une direction ascendante et descendante, de sorte qu'un verrouillage et un déverrouillage des premier (309) et second (308) raccordements de verrouillage mutuel comprend le pivotement et le mouvement de translation de la paroi latérale (200) ou d'extrémité (201).

2. Ensemble selon la revendication 1, dans lequel les premier (309) et second (308) raccordements de verrouillage mutuel comprennent des bridges (211) ayant des parties à crochet qui sont configurées pour se chevaucher lors du verrouillage mutuel.

3. Ensemble selon la revendication 2, dans lequel les brides sont positionnées au niveau ou vers des bords d'extrémité (310, 311) respectifs des parois latérale (200) et d'extrémité (201) pour se mettre en prise lorsque les bords d'extrémité (310, 311) sont couplés en contact touchant ou presque touchant lorsque les parois (200, 201) sont dans la première position levée.

4. Ensemble selon l'une quelconque des revendications précédentes, dans lequel le premier mécanisme motorisé (203) comprend un premier bras (206) monté de manière pivotante sur un second bras (207) de sorte que les premier et second bras (206, 207) sont configurés pour se plier l'un par rapport à l'autre et par rapport au bâti de support (104) lorsque la paroi latérale (200) passe dans la première position abaissée et s'aligner afin de former un appui de support redressé lorsque la paroi latérale (200) est dans la seconde position levée.

5. Ensemble selon la revendication 4, dans lequel le second bras (207) est monté de manière pivotante sur le bâti (104) et le premier bras (206) est fixé sur la paroi latérale (200) de sorte que les premier et second bras (206, 207) sont configurés pour se plier vers l'intérieur vers une position située sous la trémie (101) lorsque la paroi latérale (200) passe dans la première position abaissée.

6. Ensemble selon les revendications 4 ou 5, dans lequel le premier actionneur motorisé (409) est fixé à une région du premier bras (206) et une région du second bras (207).

7. Ensemble selon la revendication 6, dans lequel le premier actionneur motorisé (409) est monté sur le premier bras (206) et le second bras (207) de sorte que quand les bras (206, 207) sont alignés pour former l'appui de support redressé, le premier actionneur motorisé (409) est isolé des forces de compression transmises par l'appui de support depuis la paroi latérale (200).

8. Ensemble selon l'une quelconque des revendications précédentes, dans lequel le deuxième actionneur motorisé (502) est monté pour s'étendre entre le bâti (104) et la paroi d'extrémité (201) et le troisième actionneur motorisé (501) est monté pour s'étendre entre le bâti (104) et le second support de pivot pour fournir un mouvement de translation du second support de pivot dans la direction ascendante et descendante.

9. Ensemble selon la revendication 8, dans lequel le second support de pivot comprend :
une console de support (205) prévue au niveau du bâti de support (104), la console (205) ayant une première fente allongée (301) ; et
une première broche de pivot (209) autour de laquelle la paroi d'extrémité (201) peut pivoter, la première broche de pivot (209) étant montée de manière coulissante à l'intérieur de la fente allongée (301).

10. Ensemble selon la revendication 9, dans lequel :
le troisième actionneur motorisé (501) est monté pour agir sur la première broche de pivot (209) afin d'amener la première broche de pivot (209) à coulisser dans la direction ascendante et descendante à l'intérieur de la première fente (301) ; et
le deuxième actionneur motorisé (502) est monté entre la paroi d'extrémité (201) et la console (205) pour amener la paroi d'extrémité (201) à tourner autour de la première broche de pivot (209).

11. Ensemble selon la revendication 10, dans lequel le troisième actionneur motorisé (501) est monté sur la console (205) via une seconde broche de pivot (316) montée de manière coulissante à l'intérieur d'une seconde fente allongée (302) prévue dans la console (205), le troisième actionneur motorisé (501) étant configuré pour se déplacer dans la direction ascendante et descendante avec le mouvement de translation de la paroi d'extrémité (201).

12. Ensemble selon la revendication 11, dans lequel le second mécanisme motorisé (204) comprend :
une paire de consoles de support (205), une paire de premières broches de pivot (209) et une paire de première et seconde fentes allongées (301, 302) ; et
une paire de deuxièmes actionneurs motorisés (502) et une paire de troisièmes actionneurs motorisés (501) prévues respectivement au niveau de chaque console (205).

13. Ensemble selon l'une quelconque des revendications 10 à 12, comprenant en outre au moins une protection formant couvercle (304) montée de manière pivotante pour être suspendue à une région de la paroi d'extrémité (201) afin de recouvrir les deuxième et troisième actionneurs motorisés (502, 501) lorsque la paroi d'extrémité (201) est dans la seconde position levée.

14. Ensemble selon la revendication 3, comprenant deux parois latérales (200), dans lequel chaque paroi (200) comprend une pluralité de brides au niveau d'un bord d'extrémité (310) respectif, chaque bride des parois latérales (200) étant agencée de sorte que chaque partie de crochet s'étend vers le haut ; et
dans lequel la paroi d'extrémité (201) comprend une pluralité de bridges au niveau de chaque bord d'extrémité (311), dans lequel chaque bride de la paroi d'extrémité (201) est agencée de sorte que chaque partie de crochet s'étend vers le bas ;
dans lequel lorsque les brides sont verrouillées, les parties de crochet s'étendant vers le haut et vers le bas respectives se chevauchent pour verrouiller les parois latérales (200) avec la paroi d'extrémité (201).

15. Appareil de traitement de matériau en vrac mobile (100) comprenant :
un bâti principal (104) ;
une unité de traitement (102) supportée au niveau du bâti principal (104) ;
des chenilles (105) ou des roues pour permettre à l'appareil (100) de se déplacer sur le sol ; et
un ensemble de trémie pliante (101) selon l'une quelconque des revendications précédentes pour contenir le matériau à amener à l'unité de traitement (102).
